# EUROPÄISCHE PATENTSCHRIFT

(11) **EP 1 140 548 B1**
(45) Veröffentlichungstag und Bekanntmachung des Hinweises auf die Patenterteilung: **11.09.2002**
(21) Anmeldenummer: 99965452.8
(22) Anmeldetag: 13.12.1999
(51) Int. Cl.: B60K 41/14, F16H 61/12

(54) **VERFAHREN ZUM ÜBERWACHEN EINES STUFENLOSEN GETRIEBES**
METHOD FOR MONITORING A CONTINUOUSLY VARIABLE TRANSMISSION
PROCEDE DE CONTROLE POUR TRANSMISSION A VARIATION CONTINUE

(30) Priorität: 17.12.1998 DE 19858263
(43) Veröffentlichungstag der Anmeldung: 10.10.2001
(73) Patentinhaber: ZF Batavia, L.L.C., Batavia, OH 45103 (US)
(72) Erfinder: GIERLING, Armin, D-88085 Langenargen (DE)
(74) Vertreter: Zietlow, Karl-Peter
(86) Internationale Anmeldenummer: EP9909859
(87) Internationale Veröffentlichungsnummer: WO00035703

(56) Entgegenhaltungen:
- DE-A- 4 436 506
- US-A- 4 660 440
- US-A- 4 698 764
- US-A- 5 042 325
- US-A- 5 191 815
- US-A- 5 259 272
- PATENT ABSTRACTS OF JAPAN vol. 014, no. 033 (M-923), 22. Januar 1990 (1990-01-22) & JP 01 269620 A (MAZDA MOTOR CORP), 27. Oktober 1989 (1989-10-27)

## Beschreibung

Die vorliegende Erfindung betrifft ein Verfahren zum Überwachen des Systemdrucks eines stufenlosen Getriebes (CVT) für Kraftfahrzeuge, das einerseits über eine permanente mechanische Verbindung mit dem Antriebsmotor des Kraftfahrzeuges und andererseits über einen Abtriebsstrang mit den Rädern des Kraftfahrzeuges verbunden ist, mittels der elektronischen Getriebesteuerung.

Stufenlose Getriebe, auch CVT genannt, besitzen einen Variator zur Übersetzungseinstellung; bekannte Bauformen sind z. B. Toroid- und Umschlingungsvariatoren. Ein Umschlingungsvariator weist beispielsweise ein erstes Kegelscheibenpaar auf einer Antriebswelle und ein zweites Kegelscheibenpaar auf einer Abtriebswelle auf. Jedes Kegelscheibenpaar besteht aus einer in axialer Richtung feststehenden ersten Scheibe und einer in axialer Richtung verschiebbaren zweiten Kegelscheibe, auch Primärscheibe bzw. Sekundärscheibe genannt. Zwischen den Kegelscheibenpaaren läuft ein Umschlingungsorgan, z. B. ein Schubgliederband. Die Verstellung der Primärscheibe bzw. Sekundärscheibe erfolgt durch ein Druckmedium. Hierzu steuert die elektronische Getriebesteuerung über elektromagnetische Stellglieder und hydraulische Ventile das Druckniveau der Stellräume von Primärscheibe und Sekundärscheibe.

Die ordnungsgemäße Funktion eines CVT wird vielfältig von der elektronischen Getriebesteuerung überwacht. So ist aus der EP B 228 884 bekannt, die ordnungsgemäße Funktion zweier Drehzahlsensoren zu überwachen, die dem Primär- und Sekundärkegelscheibenpaar zugeordnet sind, wobei geprüft wird, ob das Drehzahlsignal vorhanden ist oder nicht. Bei Nichtvorhandensein der Drehzahl des Sekundärkegelscheibenpaares kann durch die elektronische Getriebesteuerung das Übersetzungsverhältnis auf einen ausfallsicheren Wert gesteuert werden. Auch bei Nichtvorhandensein der Drehzahl des Primärkegelscheibenpaares wird die Drehzahl des Primärkegelscheibenpaares auf einen ausfallsicheren Wert gesteuert.

Des weiteren ist aus der DE A 44 36 506 eine Einrichtung zum Steuern eines CVT bekannt, das mit einer Antriebseinheit, die eine Bremskraftmaschine oder ein Elektromotor sein kann, über eine Antriebswelle verbunden ist. Das CVT weist einen hydrodynamischen Wandler mit Überbrückungskupplung auf, einen Wendesatz, ein erstes Kegelscheibenpaar, ein zweites Kegelscheibenpaar, ein Umschlingungsorgan und ein hydraulisches Steuergerät. Die Antriebswelle treibt den hydrodynamischen Wandler an, der aus einem Pumpenrad, einem Turbinenrad und einem Leitrad besteht. Dem hydrodynamischen Wandler ist eine Wandlerüberbrückungskupplung zugeordnet. Das Turbinenrad bzw. die Wandlerüberbrückungskupplung sind mit einer Getriebeeingangswelle verbunden. Die Getriebeeingangswelle treibt den Wendesatz an, über den die Drehzahl der Getriebeeingangswelle direkt auf das erste Kegelscheibenpaar übertragen wird oder es erfolgt eine Drehrichtungsumkehr für Rückwärtsfahrt.

Das CVT wird von der elektronischen Getriebesteuerung mittels elektromagnetischer Stellglieder und hydraulischer Ventile gesteuert, die Kupplungen und Bremsen bzw. deren Druckverlauf regeln. Die elektromagetischen Stellglieder und hydraulischen Ventile befinden sich im hydraulischen Steuergerät; der elektronischen Getriebesteuerung werden eine Vielzahl von Überwachungssignalen zugeführt, die z. B. die Laststellung der Antriebseinheit, die Drehzahl der Getriebeeingangswelle, die Drehzahl der Abtriebswelle und die Temperatur des Druckmediums betreffen. Für den Fall eines Ausfalls des elektronischen Steuergeräts ist diese bekannte Einrichtung mit einer Notfahreinrichtung versehen, mittels der ein konstantes Druckverhältnis zwischen Primärscheibe und Sekundärscheibe eingestellt wird. Anstelle eines hydrodynamischen Wandlers zwischen Antriebsmotor und CVT kann auch eine starre mechanische oder drehschwingungstechnisch gedämpfte mechanische Verbindung, z. B. mittels Welle, Torsionsdämpfer, Zweimassenschwungrad etc. eingesetzt werden. Da zwischen dem Wandler und dem Variator der Wendesatz mit den kraftflußschließendem Kupplungen für Vorwärts- und Rückwärtsfahrt angeordnet ist, besteht in dieser beschriebenen Anordnung keine permanente Verbindung des Variators mit dem Motor.

Die **JP1269620** A zeigt den nächstliegenden Stand der Technik zum Gegenstand des Anspruches 1 und offenbart ein Verfahren zum überwachen des Systemsdrucks eines stufenlosen Getriebes für Kraftfahrzeuge, das über eine hydrokinetische Kupplung mit dem Antriebsmotor des Kraftfahrzeuges verbunden ist. Bei Erkennen eines Systemdruckabfalls, wird eine Warnanzeige aktiviert, wird eine Fehlermeldung im Getriebe-Diagnose-Speicher eingetragen und ein Signal wird an die elektronische Motorsteuerung abgegeben, um die Motordrehzahl zu reduzieren und somit ein Motorhochlauf zu vermeiden.

In einer anderen bekannten CVT-Ausführung ist die Anordnung des Variators direkt hinter dem Drehschwingungsdämpfer des Antriebsmotors, die kraftflußschließende Kupplung liegt auf der Getriebeabtriebsseite (wie z.B. in der gattungsgemäße US 4648496A). In dieser Anordnung besteht also eine permanente mechanische Verbindung des Variators mit dem Motor, die sich im Falle eines mechanischen Getriebeschadens nachteilig auswirken kann.

Aufgabe der vorliegenden Erfindung ist es, ein Verfahren zum Überwachen des Systemdrucks eines stufenlosen Getriebes für Kraftfahrzeuge zu schaffen, das eine permanente mechanische Kcpplung zwischen Motor und Getriebe aufweist und das bei Auftreten eines mechanischen Schadens und dadurch bedingten Systemdruckabfall für ein Abschalten des Motors sorgt bei gleichzeitiger Beherrschbarkeit des Fahrzeugs durch den Fahrer.

Ausgehend von einem Verfahren der eingangs näher genannten Art erfolgt die Lösung dieser Aufgabe mit den im kennzeichnenden Teil des Patentanspruchs angegebenen Merkmalen.

Das erfindungsgemäße Verfahren besteht also darin, daß der Systemdruck im CVT kontinuierlich überwacht wird, daß bei Erkennen eines Systemdruckabfalls im CVT sowohl eine Warnanzeige für den Fahrer aktiviert wird als auch ein Eintrag im Getriebe-Diagnose-Speicher erfolgt, daß die abtriebsseitige Fahrkupplung geöffnet wird, daß über eine elektrische Verbindung der elektronischen Motorsteuerung ein Signal zum Verhindern eines freien Motorhochlaufs vermittelt wird und daß die Fahrzeuggeschwindigkeit so lange überwacht wird, bis diese unterhalb eines vorgegebenen Schwellwertes liegt, wonach der Motor abgeschaltet wird.

Das erfindungsgemäße Verfahren verhindert also, daß im Falle eines Systemdruckabfalls durch einfache mechanische Schäden bei einem unzulässig langen Betrieb kapitale Folgeschäden im Getriebe auftreten. Dieses Verfahren wird von der elektronischen Getriebesteuerung durchgeführt, die über eine elektrische Verbindung mit der elektronischen Motorsteuerung, z. B. über Kabel oder den Datenbus (CAN-Kopplung), kommuniziert.

Nach Erkennung eines Systemdruckabfalls wird dabei der Kraftfluß zwischen Motor und Abtriebsstrang unterbrochen und das CVT von den Rädern entkoppelt. Durch die gleichzeitige Mitteilung an die elektronische Motorsteuerung kann der sonst mögliche freie Motorhochlauf unterbunden werden. Nach dem Öffnen der abtriebsseitigen Fahrkupplung sollte der Motor möglichst frühzeitig abgeschaltet werden. Die Auswertung der Fahrzeuggeschwindigkeit bei Erkennung des Systemsdruckabfalls gewährleistet die Beherrschbarkeit des Fahrzeugs durch den Fahrer mittels Aufrechterhaltung der Motorunterstützung von Brems- und Lenksystem.

Das erfindungsgemäße Verfahren eignet sich auch für andere mechanische Fehler im CVT, bei denen nach Erkennung eines Systemdruckabfalls ein weiteres Drehen der Getriebeinnenteile vermieden werden soll.

Im folgenden wird die Erfindung anhand der Zeichnung näher erläutert; es zeigen:
- Fig. 1: ein Getriebeschema eines CVT mit hydrodynamischen Wandler und

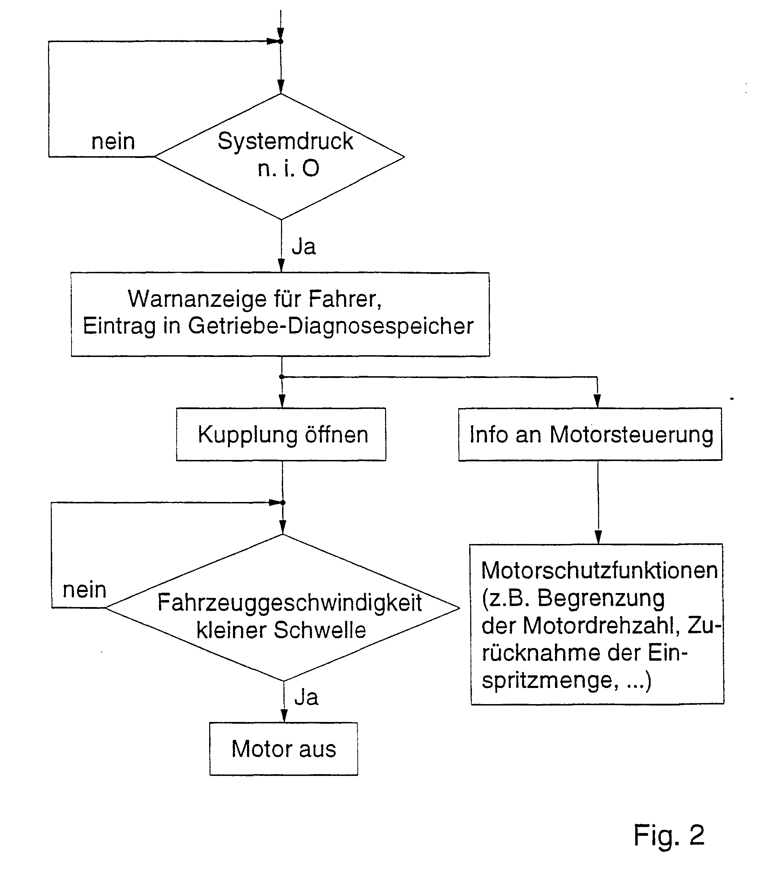

- Fig. 2: ein Funktionsschema für das erfindungsgemäße Verfahren.

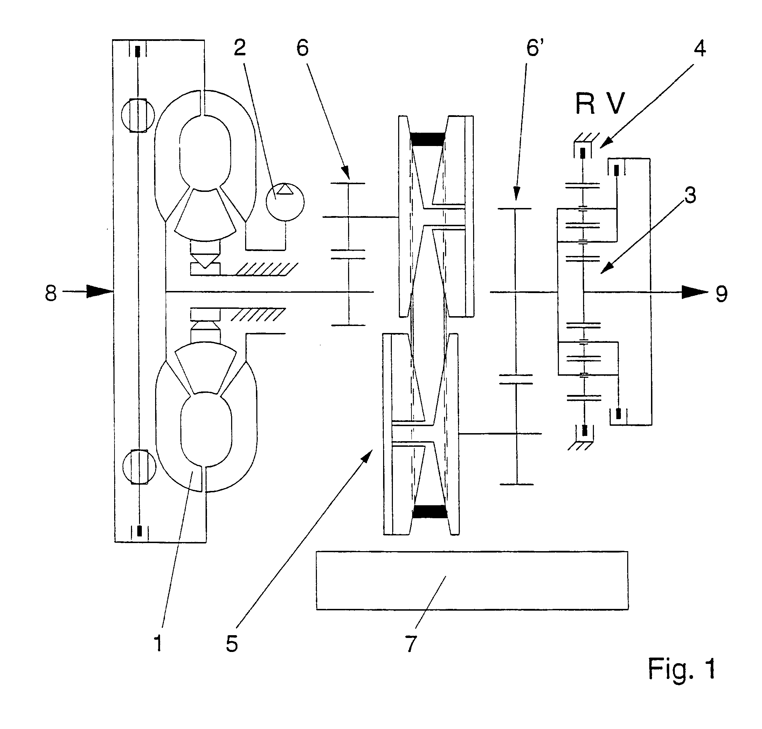

In Fig. 1 ist das Getriebeschema eines CVT dargestellt, welches einerseits über eine Antriebswelle 8 mit dem Antriebsmotor, beispielsweise einer Brennkraftmaschine eines Kraftfahrzeuges verbunden ist und über einen Abtriebsstrang 9 andererseits mit den Rädern des Kraftfahrzeuges verbunden ist. Dieses CVT weist einen hydrodynamischen Wandler 1 auf, in üblicher Weise mit einer Überbrükkungskupplung, einem Pumpenrad, einem Turbinenrad und einem Leitrad. Direkt vom Wandlerpumpenrad wird eine Pumpe 2 angetrieben. Dem hydrodynamischen Wandler 1 nachgeordnet ist eine Konstantübersetzung 6, über die die Drehzahl der Antriebswelle auf das erste Kegelscheibenpaar eines mit 5 bezeichneten Variators übertragen wird. Dieses Kegelscheibenpaar ist über ein Umschlingungsorgan, das gestrichelt dargestellt ist, mit einem zweiten Kegelscheibenpaar verbunden. Das zweite Kegelscheibenpaar des Variators 5 ist mit einer weiteren Konstantübersetzung 6' verbunden, der ein Wendesatz 3 mit Schaltelementen 4 für Vorwärts- und Rückwärtsfahrt V, R zugeordnet ist. Der Wendesatz 3 ist mit dem Abtriebsstrang 9 verbunden. Mit 7 ist die hydraulische Steuerung für das CVT bezeichnet.

Wird nun das CVT nicht mit einem hydrodynamischen Wandler, wie in Fig. 1 dargestellt, sondern über eine starre mechanische oder auch drehschwingungstechnisch gedämpfte mechanische Verbindung, d. h. mittels Welle, Torsionsdämpfer, Zweimassenschwungrad etc, mit dem Antriebsmotor des Kraftfahrzeuges verbunden, so daß eine permanente mechanische Verbindung des Variators mit dem Motor besteht, so kann im Falle eines Getriebeschadens diese permanente Kopplung Motor/Variator kritisch sein. Schon einfache mechanische Schäden können dann durch eine weiteren Bauteilrotation im CVT zu kapitalen Folgeschäden führen.

Um dies zu verhindern, ist erfindungsgemäß vorgesehen, daß die (nicht dargestellte) elektronische Getriebesteuerung für das CVT den Systemdruck im CVT kontinuierlich überwacht. Tritt nun ein Systemdruckabfall auf, so wird dieser durch entsprechende Sensorik erkannt, woraufhin die elektronische Getriebesteuerung eine Warnanzeige für den Fahrer aktiviert sowie einen Eintrag im Getriebe-Diagnosespeicher vornimmt. Mit einem anschließend oder gleichzeitig von der elektronischen Getriebesteuerung abgegebenen Signal wird die abtriebsseitige Fahrkupplung geöffnet und zugleich über eine elektrische Verbindung zwischen elektronischer Getriebesteuerung und elektronischer Motorsteuerung letzterer eine Information übermittelt, welche Motorschutzfunktionen in Gang setzt, z. B. die Begrenzung der Motordrehzahl, die Zurücknahme der Einspritzmenge etc., um einen freien Motorhochlauf zu verhindern.

Die gleichzeitige Überwachung der Fahrzeuggeschwindigkeit erfolgt solange, bis diese unterhalb eines vorgegebenen Schwellwertes liegt, wonach der Motor abgeschaltet wird. Diese Auswertung der Fahrzeuggeschwindigkeit bei Erkennen eines Systemdruckabfalls gewährleistet die Beherrschbarkeit des Fahrzeugs durch den Fahrer durch Aufrechterhaltung der Motorunterstützung von Brems- und Lenksystem.

### Bezugszeichen

- 1: Wandler
- 2: Pumpe
- 3: Wendesatz
- 4: Schaltelemente
- 5: Variator
- 6: Konstantübersetzung
- 6': Konstantübersetzung
- 7: hydraulische Steuerung
- 8: Antriebswelle
- 9: Abtriebsstrang

## Patentansprüche

1. Verfahren zum Überwachen eines Systemdrucks eines stufenlosen Getriebes (CVT) für Kraftfahrzeuge, das einerseits über eine permanente mechanische Verbindung mit dem Antriebsmotor des Kraftfahrzeuges und andererseits über einen Abtriebsstrang mit den Rädern des Kraftfahrzeuges verbunden ist, mittels der elektronischen Getriebesteuerung, **gekennzeichnet durch** die folgenden Verfahrensschritte:
a) der Systemdruck im CVT wird kontinuierlich überwacht;
b) ein Systemdruckabfall wird dem Fahrer gemeldet;
c) ein Systemdruckabfall wird im Getriebe-Diagnose-Speicher eingetragen;
d) die abtriebsseitige Fahrkupplung wird geöffnet;
e) der elektronischen Motorsteuerung wird ein Signal zum Verhindern eines freien Motorhochlaufs übermittelt und
f) die Fahrzeuggeschwindigkeit wird solange überwacht, bis diese unterhalb eines vorgegebenen Schwellwertes ist, wonach der Motor abgeschaltet wird.

## Claims

1. Method for monitoring the system pressure of a continuously variable transmission/CVT for motor vehicles, which by means of a permanent mechanical connection is connected to the drive motor of the motor vehicle and by means of the electronic transmission control is connected via the drive train with the wheels of the motor vehicle,
**characterized by** the following steps:
a) System pressure in the CVT is continuously monitored;
b) any system pressure drop is reported to the driver;
c) any system pressure drop is recorded in the transmission diagnostics memory;
d) the output-end drive clutch is opened;
e) the electronic engine control receives a signal to prevent free revving-up and
f) vehicle speed is monitored until it is below a preset threshold value, after which the engine is switched off.

## Revendications

1. Méthode de surveillance de la pression de système d'une boîte de vitesses à variation continue pour véhicules automobiles - laquelle est liée, d'un côté, au moyen d'une liaison mécanique permanente au moteur de propulsion du véhicule automobile et, d'autre côté, par l'intermédiaire d'une chaîne cinématique de sortie, aux roues du véhicule automobile - au moyen d'un boîtier de commande électronique de boîte de vitesses, **caractérisée par** les procédés suivants :
a) la pression de système à l'intérieur de la boîte de vitesses à variation continue est surveillée de façon permanente ;
b) toute chute de pression de système est signalée au conducteur ;
c) toute chute de pression de système est enregistrée dans la mémoire de l'appareil diagnostique de la boîte de vitesses ;
d) l'embrayage principal côté sortie est ouvert ;
e) au boîtier de commande électronique du moteur est transmis un signal pour inhiber tout emballement moteur et
f) la vitesse du véhicule est surveillée jusqu'à ce qu'elle baisse en-dessous d'un seuil prédéfini, le moteur étant ensuite arrêté.
